# FASCICULE DE BREVET EUROPEEN

(11) **EP 3 191 420 B1**
(45) Date de publication et mention de la délivrance du brevet: **23.08.2023**
(21) Numéro de dépôt: 15770577.3
(22) Date de dépôt: 11.09.2015
(51) Int. Cl.: C03C 3/087, C03C 10/00, F24C 15/10

(54) **PLAQUE EN VITROCERAMIQUE**
GLASKERAMISCHE PLATTE
GLASS-CERAMIC PLATE

(30) Priorité: 12.09.2014 FR 1458568
(43) Date de publication de la demande: 19.07.2017
(73) Titulaire: Eurokera S.N.C., 02400 Château-Thierry (FR)
(72) Inventeur: PLEVACOVA, Kamila, F-75017 Paris (FR); LECOMTE, Emmanuel, F-02400 Nesles La Montagne (FR); JOUSSEAUME, Cécile, F-75017 Paris (FR); DI CARO, Richard, F-75011 Paris (FR)
(74) Mandataire: Saint-Gobain Recherche
(86) Numéro de dépôt international: PCT/FR2015/052437
(87) Numéro de publication internationale: WO 2016/038319

(56) Documents cités:
- EP-A1- 1 146 018
- EP-A1- 2 284 131
- JP-A- H11 100 229

## Description

L'invention se rapporte au domaine des plaques en vitrocéramique transparentes, incolores et non-diffusantes, en particulier utilisées dans des dispositifs de cuisson, comme panneaux de portes ou vitres de four, ou encore comme inserts de cheminées.

Les applications précitées requièrent des plaques présentant une résistance thermomécanique élevée, en particulier une excellente résistance au choc thermique, ainsi qu'une résistance aux atmosphères corrosives à haute température. Les vitrocéramiques du type aluminosilicate de lithium répondent à ce cahier des charges particulièrement exigeant. Ces vitrocéramiques sont obtenues par un procédé en deux étapes : dans une première étape, on obtient des plaques de verre précurseur, qui subissent dans une deuxième étape un traitement de cristallisation contrôlée. Ce traitement thermique, appelé « céramisation », permet de faire croître au sein du verre des cristaux de structure β-quartz ou β-spodumène (selon la température de céramisation), qui ont généralement la particularité de posséder des coefficients de dilatation thermique négatifs, si bien que la vitrocéramique possède au final un coefficient de dilatation thermique très faible.

On distingue différentes sortes de plaques en vitrocéramique du type aluminosilicate de lithium, cf. les documents JP H11 100229, EP 1 146 018 ou EP 2 284 131. Celles utilisées dans des dispositifs de cuisson, par exemple du type radiant ou par induction, sont généralement soit très teintées, donc possèdent un facteur de transmission lumineuse très faible, souvent d'au plus 3%, soit diffusantes, afin de masquer ce qui se situe en dessous de la plaque. Les vitrocéramiques teintées contiennent généralement des cristaux de structure β-quartz, tandis que les vitrocéramiques diffusantes contiennent généralement des cristaux de structure β-spodumène (ou kéatite), générés par un traitement de céramisation à plus haute température et dont le diamètre plus important provoque une diffusion de la lumière. Les cristaux de structure β-quartz sont des solutions solides contenant les éléments Si, Al, Li, Mg et Zn.

Dans des applications telles que des inserts de cheminée, des vitrages ou des portes de four, il importe au contraire que l'utilisateur puisse parfaitement visualiser ce qui se trouve derrière la plaque. Pour ce faire, des vitrocéramiques transparentes, incolores et non-diffusantes ont été développées. De telles vitrocéramiques peuvent également être employées dans des dispositifs de cuisson, et sont dans ce cas généralement associées avec des moyens de masquage, tels que des revêtements opaques organiques ou minéraux.

On entend de préférence par « transparent » le fait que le facteur de transmission lumineuse, au sens de la norme NF EN 410, est d'au moins 70%.

On entend de préférence par « incolore » le fait que les coordonnées colorimétriques en transmission (a*, b*) sont d'au plus 20 en valeur absolue, en utilisant l'observateur de référence CIE-1931 et l'illuminant de référence D65.

On entend de préférence par « non-diffusant » le fait que le flou au sens de la norme ASTM D1003-00 est d'au plus 3%, notamment 2% et même 1%. Le flou correspond au rapport entre la transmission lumineuse diffuse et la transmission lumineuse totale, exprimé en pourcents. Il est de préférence mesuré à l'aide d'un spectrophotomètre (méthode B de la norme précitée).

Traditionnellement, ces vitrocéramiques ont été produites à partir de verres précurseurs affinés à l'aide d'oxydes d'antimoine ou d'arsenic. L'affinage du verre consiste à débarrasser le verre fondu de toute inclusion gazeuse, et il est courant d'employer pour ce faire des agents d'affinage, dont le but est de générer un dégagement gazeux intense au sein du verre fondu capable d'agréger les petites inclusions gazeuses et de les faire remonter à la surface. Compte tenu de la toxicité de ces agents d'affinage, il a été plus récemment proposé d'utiliser l'oxyde d'étain (SnO₂), qui permet en outre de former le verre par le procédé de flottage, lequel consiste à déverser le verre sur un bain d'étain fondu. Il apparaît toutefois que cet oxyde a tendance à donner une couleur jaunâtre à la vitrocéramique.

Pour résoudre, ce problème, la demande EP 1837313 propose de décolorer la vitrocéramique en employant de l'oxyde de néodyme (Nd₂O₃). Outre son coût élevé, cet oxyde est toutefois susceptible de produire une coloration rose lorsque son ajout est mal maîtrisé, tout en réduisant la transmission lumineuse de la vitrocéramique. La demande EP 2284131 propose de réduire la teneur en agents nucléants ZrO₂ et surtout TiO₂, en utilisant des teneurs totales inférieures à 3,8%. Il est toutefois apparu que d'aussi faibles teneurs pouvaient entraîner une croissance non-contrôlée des cristaux de structure β-quartz, susceptible de générer un flou.

L'invention a pour but de proposer une vitrocéramique transparente, incolore et non-diffusante, n'utilisant pas d'oxydes d'arsenic et d'antimoine, dont la composition est compatible avec le procédé de laminage du verre, pouvant être produite avec un coût réduit et présentant une coloration jaune résiduelle la plus faible possible.

A cet effet, l'invention a pour objet une plaque en vitrocéramique transparente incolore et non-diffusante du type aluminosilicate de lithium et contenant des cristaux de structure β-quartz, dont la composition chimique ne contient pas d'oxydes d'arsenic, d'antimoine et de néodyme, et comprend les constituants suivants dans les limites définies ci-après exprimées en pourcentages pondéraux :

| | |
|---|---|
| SiO₂ | 55-75%, notamment 60-70%, |
| Al₂O₃ | 12-25%, notamment 19-24%, |
| Li₂O | 2-5%, notamment 3-4%, |
| Na₂O+ K₂O | 0-<2%, notamment 0-1%, |
| Li₂O+Na₂O+K₂O | 0-<7%, notamment 0-5%, |
| CaO | 0,3-5%, |
| MgO | 0-5%, notamment 0-1%, |
| SrO | 0-5%, notamment 0-1%, |
| BaO | 0,5-10%, notamment 1-5%, |
| CaO+BaO | >1%, notamment 3-5%, |
| ZnO | 0-5%, notamment 1-2%, |
| TiO₂ | ≤1, 8%, |
| ZrO₂ | ≤3%, notamment 2-3%, |
| TiO₂ + ZrO₂ | >3,80%, |
| SnO₂ | ≥0,1%, |
| SnO₂/(SnO₂+ZrO₂+TiO₂) | <0,1, notamment <0,06. |

Le facteur de transmission lumineuse de la plaque selon l'invention est de préférence d'au moins 75%, notamment 80%. Ce facteur est typiquement calculé selon la norme NF EN 410 à partir d'un spectre en transmission mesuré à l'aide d'un spectrophotomètre. De telles valeurs sont particulièrement appréciables dans le cas de plaques utilisées comme portes de four, inserts de cheminée, vitrages anti-feu, afin d'assurer la meilleure visibilité possible aux utilisateurs.

La coordonnée colorimétrique b* de la plaque selon l'invention est de préférence d'au plus 20, notamment 15. Une faible valeur (positive) de b* traduit une teinte plus neutre, moins jaune. La coordonnée b* est de préférence d'au moins -2, voire 0. La coordonnée a* est quant à elle de préférence comprise entre -5 et +5, notamment entre -2 et +1. Ces grandeurs sont calculées de manière connue, à partir d'un spectre expérimental réalisé pour des longueurs d'onde comprises entre 380 et 780 nm, en prenant en considération l'illuminant D65 tel que défini par la norme ISO/CIE 10526 et l'observateur de référence colorimétrique C.I.E. 1931 tel que défini par la norme ISO/CIE 10527.

Les différentes propriétés optiques susmentionnées sont mesurées ou calculées pour l'épaisseur réelle de la plaque.

La vitrocéramique possède de préférence un coefficient de dilatation thermique linéaire d'au plus 10.10⁻⁷ K⁻¹ entre 20 et 700°C, afin de garantir une excellente résistance au choc thermique. Le coefficient de dilatation thermique linéaire est mesuré de manière connue à l'aide d'un dilatomètre, notamment selon la norme ISO 7991 :1987.

Les cristaux de structure β-quartz ont avantageusement une taille d'au plus 100 nm, notamment 80 nm, afin d'éviter la diffusion de la lumière. Cette taille correspond à la taille moyenne qui peut se déduire de diagrammes de diffraction des rayons X par la méthode de Rietveld.

La composition chimique de la plaque en vitrocéramique comprend les oxydes précédemment indiqués. De préférence, elle consiste essentiellement en ces oxydes. L'expression « consiste essentiellement en » se comprend en ce sens que les oxydes précités constituent au moins 96%, voire 98% et même 99% du poids de la vitrocéramique.

Toutes les teneurs indiquées dans le présent texte sont des teneurs pondérales.

La silice (SiO₂) est le principal oxyde formateur du verre. De fortes teneurs vont contribuer à augmenter la viscosité du verre au-delà de ce qui est acceptable, tandis que des teneurs trop faibles vont augmenter le coefficient de dilatation thermique. La teneur en silice est de préférence comprise dans un domaine allant de 60 à 70%, notamment de 62 à 66%.

L'alumine (Al₂O₃) contribue également à augmenter la viscosité du verre et donc à le rendre plus difficile à fondre. Lorsqu'il est présent en trop faibles teneurs, le verre est toutefois difficile à céramiser. La teneur en alumine est de préférence comprise dans un domaine allant de 19 à 24%, notamment de 20 à 23%.

L'oxyde de lithium (Li₂O) est essentiel pour la formation de cristaux de β-quartz. Une teneur minimale est également nécessaire afin de réduire la viscosité du verre à haute température. La teneur en Li₂O est de préférence comprise dans un domaine allant de 3 à 4%, notamment de 3,5 à 4%.

La somme des teneurs en soude (Na₂O) et potasse (K₂O), notée Na₂O+K₂O, est limitée afin d'assurer un coefficient de dilatation thermique faible. Cette somme est avantageusement d'au plus 1,5%, voire 1%.

Afin d'assurer une viscosité adéquate à haute température, permettant d'optimiser à la fois la fusion et le formage du verre précurseur, la composition de la plaque contient de la chaux (CaO) et de l'oxyde de baryum (BaO) dans les teneurs précitées. La somme des teneurs en CaO et BaO (notée CaO+BaO) est de préférence comprise dans un domaine allant de 3 à 5%, notamment de 3 à 4%.

La teneur en CaO est de préférence d'au moins 0,8%, notamment 1% et même 1,2%. Des teneurs d'au plus 3% et même 2% sont préférées, d'une part pour éviter une trop grande corrosion des réfractaires du four, d'autre part pour limiter la formation de cristaux potentiellement diffusants. CaO permet de réduire le coefficient de dilatation thermique de la vitrocéramique, en particulier lorsqu'il est substitué à BaO.

La teneur en BaO est de préférence d'au moins 1%, notamment 2%. Elle est avantageusement d'au plus 5%, voire 4% et même 3%.

La teneur en MgO est de préférence d'au plus 1% et même 0,6%. Des teneurs allant de 0,2 à 0,6% sont préférées.

La teneur en SrO est de préférence d'au plus 1%. Elle est même avantageusement nulle.

La teneur en ZnO est avantageusement comprise dans un domaine allant de 1 à 2%. Lors de la céramisation, cet oxyde participe à la formation des cristaux de structure β-quartz, et contribue donc à l'abaissement du coefficient de dilatation thermique.

Les oxydes de titane (TiO₂) et de zirconium (ZrO₂) servent d'agents nucléants et favorisent la cristallisation en masse des cristaux de structure β-quartz. Leur présence conjointe est obligatoire, et leurs teneurs respectives ont été optimisées par les inventeurs afin d'assurer de bonnes propriétés optiques à la vitrocéramique. La somme de leurs teneurs (TiO₂+ZrO₂), qui doit être supérieure à 3,80%, est de préférence supérieure à 4%. Les inventeurs ont en effet pu observer que pour de trop faibles valeurs, les cristaux de β-quartz pouvaient présenter des tailles supérieures à 100 nm, voire 200 nm, entraînant une diffusion de la lumière indésirable. La teneur en TiO₂ est d'au plus 1,8%, notamment comprise dans un domaine allant de 1,4 à 1,8%, voire de 1,5 à 1,8%. Il importe en effet de limiter la teneur en TiO₂ afin de réduire au maximum la coloration jaune de la vitrocéramique. La teneur en oxyde de zirconium est également limitée afin de ne pas conduire à des températures au liquidus trop élevées.

L'oxyde d'étain (SnO₂) est un agent d'affinage. Sa teneur est de préférence d'au moins 0,15% afin d'assurer un affinage d'excellente qualité. Il est toutefois apparu aux inventeurs que cet oxyde jouait également un rôle lors de la céramisation ainsi que pour l'apparition de la coloration jaune, influant ainsi à la fois les propriétés optiques et thermomécaniques de la vitrocéramique. Les inventeurs ont pu mettre en évidence que le rapport SnO₂/ (SnO₂+ZrO₂+TiO₂) devait être inférieur à 0,1, de préférence 0,08, voire même 0,07, 0,06 ou encore 0,05. Une telle condition assure à la fois une excellente transparence et un faible coefficient de dilatation thermique.

L'oxyde de fer (Fe₂O₃) est une impureté communément répandue, et donc nécessairement présente dans la plaque selon l'invention. Cet oxyde contribuant à jaunir la plaque, sa teneur est avantageusement d'au plus 300 ppm (0,03%), notamment 250 ppm, voire 150 ppm.

Comme indiqué précédemment, la composition de la vitrocéramique est exempte d'oxydes d'arsenic et d'antimoine. On entend par cela que ces oxydes ne sont présents au mieux que sous forme de traces, leur teneur totale ne dépassant pas 1000 ppm, voire 500 ppm et même 200 ppm. Leur teneur totale est même avantageusement nulle.

La composition de la vitrocéramique est également exempte d'oxyde de néodyme. De manière plus générale, elle est avantageusement exempte d'oxydes de terres rares (lanthanides), lesquels sont coûteux et réduisent la transmission lumineuse de la vitrocéramique.

Pour la même raison, la composition de la vitrocéramique ne contient de préférence pas d'agent colorant choisi parmi Cr₂O₃, CuO, Se, NiO, V₂O₅, ou encore des sulfures. La composition peut néanmoins comprendre de faibles quantités d'oxyde de cobalt (CoO), au plus 30 ppm et même 10 ppm, afin de réduire encore plus la coloration jaune.

La plaque en vitrocéramique possède de préférence une épaisseur comprise dans un domaine allant de 1 à 8 mm, notamment de 2 à 6 mm, voire de 3,8 à 5,2 mm. Ses dimensions latérales (après découpe aux dimensions d'utilisation) vont typiquement de 30 cm à 200 cm, notamment de 50 cm à 150 cm.

La composition de la vitrocéramique est de préférence exempte d'oxyde de phosphore P₂O₅. On entend par cela que P₂O₅ n'est présent au mieux que sous forme de traces, sa teneur ne dépassant pas 400 ppm. Elle est avantageusement nulle. P₂O₅ a en effet tendance à favoriser l'apparition de cristaux β-spodumène lors de la fabrication de vitrocéramique mais également au cours de son utilisation. La présence de P₂O₅ peut ainsi provoquer l'apparition de zones de flou, notamment aux points chauds, lors du vieillissement de la vitrocéramique.

L'invention a également pour objet une plaque en verre susceptible d'être transformée en une plaque en vitrocéramique selon l'invention par un traitement de céramisation. La composition chimique de la plaque en verre est sensiblement identique à celle de la plaque en vitrocéramique. Elle est en revanche de nature vitreuse, exempte de cristaux.

L'invention a encore pour objet un procédé d'obtention d'une plaque en vitrocéramique selon l'invention, comprenant une étape de fusion, une étape de formage, puis une étape de céramisation.

La fusion est typiquement réalisée dans des fours réfractaires à l'aide de brûleurs utilisant comme comburant de l'air ou, mieux, de l'oxygène, et comme combustible du gaz naturel ou du fioul. Des résistances en molybdène ou en platine immergées dans le verre en fusion peuvent également apporter toute ou partie de l'énergie utilisée pour obtenir un verre fondu. Des matières premières (silice, spodumène, pétalite, carbonate de lithium etc.) sont introduites dans le four et subissent sous l'effet des hautes températures diverses réactions chimiques, telles que des réactions de décarbonatation, de fusion proprement dite... Le porteur de lithium est de préférence le carbonate de lithium, dont la teneur en impuretés est plus faible que celles rencontrée habituellement dans des porteurs naturels tels que le spodumène ou la pétalite. Des porteurs naturels pauvres en impuretés (par exemple comprenant moins de 200 ppm d'oxyde de fer) sont toutefois utilisables. La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, par étirage (vers le haut ou vers le bas) ou encore par flottage, technique consistant à déverser le verre fondu sur un bain d'étain en fusion.

L'étape de céramisation implique de préférence un cycle thermique mettant en œuvre une montée en température vers une température de cristallisation de préférence comprise dans un domaine allant de 850 à 1000°C, notamment de 860 à 960°C. Le choix des températures et/ou des temps de céramisation, à adapter à chaque composition, permet d'ajuster le coefficient de dilatation thermique du matériau obtenu en faisant varier la taille et la quantité de cristaux. De préférence, le cycle thermique comprend une montée vers une température comprise entre 650°C et 860°C pendant une durée de 15 à 200 minutes (étape de nucléation) puis une montée vers une température comprise entre 860 et 960°C pendant une durée de 5 à 120 minutes (étape de croissance cristalline).

L'invention a également pour objet des articles comprenant au moins une plaque en vitrocéramique selon l'invention.

De tels articles sont notamment :
- un dispositif de cuisson
- une porte de four domestique notamment en tant que plaque destinée à être la plus proche de l'enceinte dudit four.
- un insert de cheminée
- un vitrage résistant au feu.

Le dispositif de cuisson est de préférence du type radiant ou par induction. Il est préférable que la plaque soit apte à dissimuler les moyens de chauffage (par exemple les inducteurs), le câblage électrique, ainsi que les circuits de commande et de contrôle du dispositif de cuisson. A cet effet il est possible de munir une partie de la surface de la plaque (celle qui dans le dispositif de cuisson est située au regard des éléments à dissimuler) d'un revêtement déposé sur et/ou sous la plaque, ledit revêtement ayant la capacité d'absorber et/ou de réfléchir et/ou de diffuser le rayonnement lumineux. Le revêtement peut être déposé sous la plaque, c'est-à-dire sur la surface en regard des éléments internes du dispositif, aussi appelée « face inférieure », et/ou sur la plaque, c'est-à-dire en face supérieure. Le revêtement peut être une couche à base organique, telle qu'une couche de peinture, de résine ou de laque, ou une couche à base minérale, telle qu'un émail ou une couche métallique ou d'un oxyde, nitrure, oxynitrure, oxycarbure d'un métal. De préférence, les couches organiques seront déposées en face inférieure, tandis que les couches minérales, notamment les émaux, seront déposées en face supérieure. Les différents éléments internes du dispositif de cuisson peuvent également être dissimulés par une feuille opaque disposée entre ces derniers et la plaque, par exemple une feuille de mica. Outre la plaque en verre et au moins un inducteur (de préférence trois voire quatre et même cinq), le dispositif de cuisson peut comprendre au moins un dispositif émettant de la lumière, au moins un dispositif de commande et de contrôle, l'ensemble étant compris dans un caisson. Un, le ou chaque dispositif émettant de la lumière est avantageusement choisi parmi les diodes électroluminescentes (par exemple faisant partie d'afficheurs à 7 segments), les afficheurs à cristaux liquides (LCD), à diodes électroluminescentes, éventuellement organiques (OLED), les afficheurs fluorescents (VFD). Les couleurs vues au travers de la plaque sont diverses : rouge, vert, bleu, et toutes les combinaisons possibles, dont le jaune, le violet, le blanc... Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée. Les dispositifs de commande et de contrôle comprennent généralement des touches sensitives, par exemple du type capacitif ou à infrarouge. L'ensemble des éléments internes est généralement fixé à un caisson, souvent métallique, qui constitue donc la partie inférieure du dispositif de cuisson, normalement dissimulé dans le plan de travail ou dans le corps de la cuisinière.

La porte de four domestique selon l'invention comprend de préférence une plaque interne et une plaque externe, ces deux plaques formant les deux faces planes principales extérieures de la porte, de sorte qu'une fois la porte montée sur le four, la plaque interne se trouve être la plus proche de l'enceinte du four, et la plaque externe se trouve être la plus proche de l'utilisateur. La porte de four selon l'invention comprend de préférence au moins une plaque intermédiaire située entre la plaque de verre interne et la plaque externe, et séparée de chacune de ces dernières par au moins une lame d'air. Une porte préférée comprend trois ou quatre plaques, et donc une ou deux plaque(s) intermédiaire(s). Les plaques intermédiaires et externe sont de préférence en verre, notamment silico-sodo-calcique ou borosilicate. Au moins une plaque, notamment une plaque intermédiaire, est avantageusement revêtue d'une couche bas-émissive, notamment d'une couche d'un oxyde transparent électroconducteur (TCO), tel que par exemple l'oxyde d'étain dopé, notamment au fluor ou à l'antimoine. La présence de telles couches permet de réduire les échanges de chaleur entre les plaques, contribuant ainsi à améliorer l'isolation thermique de la porte.

Les exemples de réalisations qui suivent illustrent l'invention sans la limiter.

Des plaques de vitrocéramiques ont été préparées de la manière suivante : divers échantillons de verre présentant les compositions chimiques reportées dans les tableaux ci-après ont été obtenus de manière conventionnelle par fusion de matières premières pulvérulentes.

Ces échantillons sous forme de plaque de 5 mm d'épaisseur ont ensuite subi un traitement de céramisation.

Les tableaux 1 à 3 ci-après récapitulent les résultats obtenus en indiquant pour chaque exemple :
- sa composition chimique pondérale
- la température à laquelle le verre présente une viscosité de 10000 Poises (1 Poise = 0,1 Pa.s), notée T4 et exprimée en °C,
- la température de céramisation, notée T_{c} et exprimée en °C,
- le temps de céramisation, notée t_{c} et exprimé en minutes,
- le coefficient de dilatation thermique linéaire de la vitrocéramique entre 30 et 700°C, notée α et exprimé en 10⁻⁷/K,
- l'aspect de la vitrocéramique, T pour transparent et D pour diffusant,
- le facteur de transmission lumineuse au sens de la norme NF EN 410, noté TL et exprimé en %,
- la coordonnée colorimétrique en transmission b*) calculée à partir d'un spectre expérimental, en utilisant l'observateur de référence CIE-1931 et l'illuminant de référence D65.

Les exemples C1 et C2 sont des exemples comparatifs. Leurs teneurs en oxydes de titane et de zirconium étant trop faibles, les vitrocéramiques obtenues présentent un flou inacceptable. Les exemples 1 à 11 sont des exemples selon l'invention.

**Tableau 1**

| | C1 | C2 | 1 | 2 | 3 |
|---|---|---|---|---|---|
| SiO₂ | 64,9 | 64,2 | 63,2 | 63,1 | 63,6 |
| Al₂O₃ | 21,6 | 21,3 | 22,0 | 21,4 | 21,7 |
| Li₂O | 3,70 | 3,60 | 3,90 | 3,70 | 3,70 |
| Na₂O | 0,68 | 0,68 | 0,77 | 0,80 | 0,71 |
| K₂O | 0,25 | 0,24 | 0,28 | 0,25 | 0,26 |
| MgO | 0,29 | 0,27 | 0,40 | 0,37 | 0,47 |
| CaO | 1,31 | 0,38 | 1,00 | 0,49 | 1,11 |
| BaO | 2,04 | 3,99 | 2,05 | 4,27 | 2,51 |
| ZnO | 1,50 | 1,55 | 1,60 | 1,47 | 1,47 |
| TiO₂ | 1,41 | 1,44 | 1,81 | 1,53 | 1,71 |
| ZrO₂ | 2,00 | 2,02 | 2,60 | 2,29 | 2,52 |
| TiO₂+ZrO₂ | 3,41 | 3,46 | 4,41 | 3,82 | 4,23 |
| SnO₂ | 0,31 | 0,34 | 0,23 | 0,33 | 0,19 |
| SnO₂/(TiO₂+ ZrO₂+SnO₂) | 0,083 | 0,089 | 0,049 | 0,079 | 0,043 |
| T4 (°C) | 1301 | 1307 | - | - | - |
| T_{c} (°C) | 890 | 890 | 890 | 890 | 880 |
| t_{c} (min) | 35 | 35 | 35 | 35 | 15 |
| α (10⁻⁷/K) | - | - | - | 5,8 | 5,1 |
| Aspect | D | D | T | T | T |
| TL (%) | - | - | 78,0 | 77,7 | 75,5 |
| b* | - | - | 12,1 | 13,6 | 11,9 |

**Tableau 2**

| | 4 | 5 | 6 | 7 | 8 |
|---|---|---|---|---|---|
| SiO₂ | 63,6 | 64,1 | 64,4 | 63,7 | 64,2 |
| Al₂O₃ | 21,5 | 21,1 | 21,0 | 21,7 | 22,0 |
| Li₂O | 3,69 | 3,70 | 3,69 | 3,80 | 3,66 |
| Na₂O | 0,84 | 0,87 | 0,83 | 0,65 | 0,69 |
| K₂O | 0,26 | 0,26 | 0,27 | 0,27 | 0,26 |
| MgO | 0,47 | 0,48 | 0,48 | 0,48 | 0,30 |
| CaO | 1,25 | 1,35 | 1,33 | 1,26 | 1,34 |
| BaO | 2,20 | 2,02 | 2,01 | 2,02 | 2,06 |
| ZnO | 1,50 | 1,50 | 1,48 | 1,49 | 1,41 |
| TiO₂ | 1,72 | 1,72 | 1,72 | 1,75 | 1,75 |
| ZrO₂ | 2,55 | 2,52 | 2,40 | 2,36 | 2,10 |
| TiO₂+ZrO₂ | 4,27 | 4,27 | 4,12 | 4,11 | 3,85 |
| SnO₂ | 0,26 | 0,36 | 0,41 | 0,18 | 0,26 |
| SnO₂/(TiO₂+ ZrO₂+SnO₂) | 0,057 | 0,078 | 0,088 | 0,042 | 0,063 |
| T4 (°C) | 1280 | - | 1280 | 1280 | 1288 |
| T_{c} (°C) | 890 | 870 | 890 | 890 | 890 |
| t_{c} (min) | 35 | 35 | 35 | 35 | 35 |
| α (10⁻⁷/K) | 6,7 | 7,3 | - | 5,0 | 3,1 |
| Aspect | T | T | T | T | T |
| TL (%) | 81,5 | - | 74,2 | 81,6 | 77,3 |
| b* | 8,4 | - | 14,7 | 8,4 | 10,4 |

**Tableau 3**

| | 9 | 10 | 11 |
|---|---|---|---|
| SiO₂ | 64,0 | 63,6 | 64,3 |
| Al₂O₃ | 21,9 | 21,9 | 21,6 |
| Li₂O | 3,53 | 3,51 | 3,50 |
| Na₂O | 0,74 | 0,72 | 0,61 |
| K₂O | 0,27 | 0,28 | 0,27 |
| MgO | 0,30 | 0,40 | 0,29 |
| CaO | 1,35 | 1,29 | 1,27 |
| BaO | 2,14 | 2,04 | 2,02 |
| ZnO | 1,49 | 1,63 | 1,41 |
| TiO₂ | 1,75 | 1,82 | 1,74 |
| ZrO₂ | 2,20 | 2,60 | 2,36 |
| TiO₂+ZrO₂ | 3,95 | 4,42 | 4,10 |
| SnO₂ | 0,30 | 0,23 | 0,27 |
| SnO₂/(TiO₂+ ZrO₂+SnO₂) | 0,071 | 0,078 | 0,062 |
| T4 (°C) | - | - | 1300 |
| T_{c} (°C) | 890 | 890 | 890 |
| t_{c} (min) | 35 | 35 | 35 |
| α (10⁻⁷/K) | 4,4 | - | 3,1 |
| Aspect | T | T | T |
| TL (%) | 82,5 | 78,0 | 85,5 |
| b* | 7,8 | 12,1 | 6,4 |

## Revendications

1. Plaque en vitrocéramique transparente incolore et non-diffusante du type aluminosilicate de lithium et contenant des cristaux de structure β-quartz, dont la composition chimique ne contient pas d'oxydes d'arsenic, d'antimoine et de néodyme, et comprend les constituants suivants dans les limites définies ci-après exprimées en pourcentages pondéraux :
| | |
|---|---|
| SiO₂ | 55-75%, notamment 60-70%, |
| Al₂O₃ | 12-25%, notamment 19-24%, |
| Li₂O | 2-5%, notamment 3-4%, |
| Na₂O+ K₂O | 0-<2%, notamment 0-1%, |
| Li₂O+Na₂O+K₂O | 0-<7%, notamment 0-5%, |
| CaO | 0,3-5%, |
| MgO | 0-5%, notamment 0-1%, |
| SrO | 0-5%, notamment 0-1%, |
| BaO | 0,5-10%, notamment 1-5%, |
| CaO+BaO | >1%, notamment 3-5%, |
| ZnO | 0-5%, notamment 1-2%, |
| TiO₂ | ≤1,8%, |
| ZrO₂ | ≤3%, notamment 2-3%, |
| TiO₂+ZrO₂ | >3,80%, |
| SnO₂ | ≥0,1%, |
| SnO₂/ (SnO₂+ZrO₂+TiO₂) | <0,1, notamment <0,06. |

2. Plaque en vitrocéramique selon la revendication précédente, dont le facteur de transmission lumineuse est d'au moins 75%, notamment 80%, et dont la coordonnée colorimétrique b* est d'au plus 20, notamment 15.

3. Plaque en vitrocéramique selon l'une des revendications précédentes, telle que la vitrocéramique possède un coefficient de dilatation thermique linéaire d'au plus 10.10⁻⁷ K⁻¹ entre 20 et 700°C.

4. Plaque en vitrocéramique selon l'une des revendications précédentes, telle que les cristaux de structure β-quartz ont une taille d'au plus 100 nm.

5. Plaque en vitrocéramique selon l'une des revendications précédentes, telle que la somme des teneurs en TiO₂ et ZrO₂ est supérieure à 4%.

6. Plaque en vitrocéramique selon l'une des revendications précédentes, telle que la teneur en SnO₂ est d'au moins 0,15%.

7. Plaque en vitrocéramique selon l'une des revendications précédentes, telle que la teneur en CaO est d'au moins 0,8%.

8. Plaque en verre susceptible d'être transformée en une plaque en vitrocéramique selon l'une des revendications précédentes par un traitement de céramisation.

9. Dispositif de cuisson comprenant au moins une plaque selon l'une des revendications 1 à 7.

10. Porte de four domestique comprenant au moins une plaque selon l'une des revendications 1 à 7, notamment en tant que plaque destinée à être la plus proche de l'enceinte dudit four.

11. Insert de cheminée comprenant au moins une plaque selon l'une des revendications 1 à 7.

12. Vitrage résistant au feu comprenant au moins une plaque selon l'une des revendications 1 à 7.

13. Procédé d'obtention d'une plaque en vitrocéramique selon l'une des revendications 1 à 7, comprenant une étape de fusion, une étape de formage, puis une étape de céramisation.

## Patentansprüche

1. Farblose, transparente und nicht lichtstreuende Glaskeramikplatte einer Lithiumaluminosilicatart und die die Kristalle einer β-Quarzstruktur enthält, deren chemische Zusammensetzung keine Arsen-, Antimon- und Neodymoxide enthält, und die die folgenden Bestandteile innerhalb der nachstehend angegebenen Grenzen in Gewichtsprozent umfasst:
| | |
|---|---|
| SiO₂ | 55-75 %, insbesondere 60-70 %, |
| Al₂O₃ | 12-25 %, insbesondere 19-24 %, |
| Li₂O | 2-5 %, insbesondere 3-4 %, |
| Na₂O+ K₂O | 0-<2 %, insbesondere 0-1 %, |
| Li₂O+Na₂O+K₂O | 0-<7 %, insbesondere 0-5 %, |
| CaO | 0,3-5 %, |
| MgO | 0-5 %, insbesondere 0-1 %, |
| SrO | 0-5 %, insbesondere 0-1 %, |
| BaO | 0,5-10 %, insbesondere 1-5 %, |
| CaO+BaO | >1 %, insbesondere 3-5 %, |
| ZnO | 0-5 %, insbesondere 1-2 %, |
| TiO₂ | ≤1,8 %, |
| ZrO₂ | ≤3 %, insbesondere 2-3 %, |
| TiO₂+ZrO₂ | >3,80 %, |
| SnO₂ | ≥0,1 %, |
| SnO₂/(SnO₂+ZrO₂+TiO₂) | <0,1, insbesondere <0,06. |

2. Glaskeramikplatte nach dem vorstehenden Anspruch, deren Lichtdurchlässigkeitsfaktor mindestens 75 %, insbesondere 80 %, beträgt und deren b*-Farbwertkoordinaten höchstens 20, insbesondere 15, beträgt.

3. Glaskeramikplatte nach einem der vorstehenden Ansprüche, wobei die Glaskeramik einen linearen Wärmeausdehnungskoeffizienten von höchstens 10,10⁻⁷ K⁻¹ zwischen 20 bis 700 °C aufweist.

4. Glaskeramikplatte nach einem der vorstehenden Ansprüche, wobei die Kristalle der β-Quarzstruktur eine Größe von höchstens 100 nm aufweisen.

5. Glaskeramikplatte nach einem der vorstehenden Ansprüche, wobei die Summe der TiO₂- und ZrO₂-Gehalte größer als 4 % ist.

6. Glaskeramikplatte nach einem der vorstehenden Ansprüche, wobei der SnO₂-Gehalt mindestens 0,15 % beträgt.

7. Glaskeramikplatte nach einem der vorstehenden Ansprüche, wobei der CaO-Gehalt mindestens 0,8 % beträgt.

8. Glasscheibe, die in eine Glaskeramikplatte nach einem der vorstehenden Ansprüche durch eine Keramisierungsbehandlung umgewandelt werden kann.

9. Kochvorrichtung, umfassend mindestens eine Platte nach einem der Ansprüche 1 bis 7.

10. Haushaltsofentür, umfassend mindestens eine Platte nach einem der Ansprüche 1 bis 7, insbesondere als Platte, die dafür bestimmt ist, die nächste zu dem Gehäuse des Ofens zu sein.

11. Kamineinsatz, umfassend mindestens eine Platte nach einem der Ansprüche 1 bis 7.

12. Feuerfeste Verglasung, umfassend mindestens eine Platte nach einem der Ansprüche 1 bis 7.

13. Verfahren zum Erhalten einer Glaskeramikplatte nach einem der Ansprüche 1 bis 7, umfassend einen Schmelzschritt, einen Formungsschritt und dann einen Keramisierungsschritt.

## Claims

1. A transparent, colorless and non-scattering glass-ceramic plate of lithium aluminosilicate type and containing crystals of β-quartz structure, the chemical composition of which does not contain oxides of arsenic, of antimony and of neodymium, and comprises the following constituents within the limits defined below, expressed as weight percentages:
| | |
|---|---|
| SiO₂ | 55-75%, in particular 60-70%, |
| Al₂O₃ | 12-25%, in particular 19-24%, |
| Li₂O | 2-5%, in particular 3-4%, |
| Na₂O+K₂O | 0-<2%, in particular 0-1%, |
| Li₂O+Na₂O+K₂O | 0-<7%, in particular 0-5%, |
| CaO | 0.3-5%, |
| MgO | 0-5%, in particular 0-1%, |
| SrO | 0-5%, in particular 0-1%, |
| BaO | 0.5-10%, in particular 1-5%, |
| CaO+BaO | >1%, in particular 3-5%, |
| ZnO | 0-5%, in particular 1-2%, |
| TiO₂ | ≤1.8%, |
| ZrO₂ | ≤3%, in particular 2-3%, |
| TiO₂+ZrO₂ | >3.80%, |
| SnO₂ | ≥0.1%, |
| SnO₂/ (SnO₂+ZrO₂+TiO₂) | <0.1, in particular <0.06. |

2. The glass-ceramic plate as claimed in the preceding claim, the light transmission factor of which is at least 75%, in particular 80%, and the b* color coordinate of which is at most 20, in particular 15.

3. The glass-ceramic plate as claimed in either of the preceding claims, such that the glass-ceramic has a coefficient of linear thermal expansion of at most 10×10⁻⁷ K⁻¹ between 20 and 700°C.

4. The glass-ceramic plate as claimed in one of the preceding claims, such that the crystals of β-quartz structure have a size of at most 100 nm.

5. The glass-ceramic plate as claimed in one of the preceding claims, such that the sum of the TiO₂ and ZrO₂ contents is greater than 4%.

6. The glass-ceramic plate as claimed in one of the preceding claims, such that the SnO₂ content is at least 0.15%.

7. The glass-ceramic plate as claimed in one of the preceding claims, such that the CaO content is at least 0.8%.

8. A glass plate capable of being converted to a glass-ceramic plate as claimed in one of the preceding claims by a ceramization treatment.

9. A cooking device comprising at least one plate as claimed in one of claims 1 to 7.

10. A domestic oven door comprising at least one plate as claimed in one of claims 1 to 7, in particular as a plate intended to be the closest to the chamber of said oven.

11. A fireplace insert comprising at least one plate as claimed in one of claims 1 to 7.

12. A fire-resistant glazing comprising at least one plate as claimed in one of claims 1 to 7.

13. A process for obtaining a glass-ceramic plate as claimed in one of claims 1 to 7, comprising a melting step, a forming step, then a ceramization step.
